# EUROPÄISCHE PATENTANMELDUNG

(11) **EP 2 557 332 A2**
(43) Veröffentlichungstag der Anmeldung: **13.02.2013**
(21) Anmeldenummer: 12175089.7
(22) Anmeldetag: 05.07.2012
(51) Int. Cl.: F16D 57/04

(54) **Hydrodynamischer Retarder**

(30) Priorität: 09.08.2011 DE 102011080643
(71) Anmelder: ZF Friedrichshafen AG, 88038 Friedrichshafen (DE)
(72) Erfinder: Bayer, Ewgeni, 88048 Friedrichshafen (DE)

(57) **Zusammenfassung**

Die Erfindung betrifft einen hydrodynamischer Retarder mit einem Statorschaufelrad (27) und einem Rotorschaufelrad (25), die jeweils eine Mehrzahl von Schaufeln (23, 35) aufweisen, welche zwischen sich einen hydrodynamischen Kreis (41) bilden, mit einer Fluidzuführvorrichtung (43) sowie einer Fluidauslassvorrichtung (45), die mit dem hydrodynamischen Kreis (41) strömungstechnisch verbunden sind, wobei die Fluidzuführvorrichtung (43) als eine Einlassspirale (110) ausgebildet und radial unterhalb der Statorschaufeln (35) am Retarderträger (1) angeordnet ist, sowie mit einem Druckausgleichsraum (49), der fern von Statorschaufelrad (27) zwischen dem Rotorschaufelrad (25) und einem sich nach radial innen erstreckenden sowie drehfest angeordneten Dichtflansch (51) ausgebildet ist, und bei dem der Druckausgleichsraum (49) mit dem hydrodynamischen Kreis (41) radial außen über einen Spalt (75) zwischen den Schaufeln (23) des Rotors und dem Dichtflansch (51) sowie radial innen über wenigstens eine Druckausgleichsbohrung (47) verbunden ist.

Zur Entlastung der radial innen angeordneten Nabe (15) des Rotors bzw. eines zugeordneten Axiallagers (17) und des radial inneren Abschnittes des Dichtflansches (51) ist vorgesehenen, dass das radial innere Ende (80) der wenigstens einen Druckausgleichsbohrung (47) in gleicher oder größerer radialer Entfernung zur Drehachse (90) des Retarders angeordnet ist wie der radial innerste Teil (82) der Einlassspirale (110).

## Beschreibung

Die Erfindung betrifft einen hydrodynamischen Retarder gemäß dem Oberbegriff des Anspruchs 1.

Gattungsgemäße hydrodynamische Retarder sind aus der DE 103 43 425 A1, DE 103 43 427 A1 und DE 10 2007 025 676 A1 bekannt. Bei diesen Retardern sind an einem Retarderträger kreisförmig Statorschaufeln befestigt, denen mit geringem Abstand, einen radialen Spalt bildend, konzentrisch gegenüber Schaufeln eines Rotors angeordnet sind. Die Rotorschaufeln sind an einem Rotorgrundkörper angeordnet und über einen Rotorschalenhals mit einer Rotornabe verbunden, die ihrerseits mit einem den Rotor antreibenden Bauteil, beispielsweise einer Welle oder einer Kupplungsnabe, drehfest verbunden ist. Die Rotornabe ist über ein Axiallager an einem drehfesten Bauteil abgestützt, während die Welle oder Kupplungsnabe über ein Radiallager ebenfalls an einem drehfesten Bauteil gelagert ist. Zwischen der statorfernen Seite des Rotors und einem axial gegenüber drehfest angeordneten Dichtflansch ist ein Druckausgleichsraum ausgebildet. Der Dichtflansch übergreift den Rotor radial außen axial und erstreckt sich nach radial innen bis in den Bereich der Rotornabe, an der er über eine Dichtung anliegt.

Der Druckausgleichsraum ist radial außen über einem ringförmigen axialen Spalt zwischen dem Rotor und dem diesen Rotor radial und axial übergreifenden Dichtflansch sowie radial innen über wenigstens eine Druckausgleichsbohrung im Rotorschalenhals mit dem zwischen dem Stator und dem Rotor gebildeten hydrodynamischen Kreis verbunden. Als hydrodynamischer Kreis wird derjenige Raum zwischen dem Rotor und dem Stator verstanden, in den ein Fluid einspeisbar ist und dort für eine bremsende Energieübertragung von dem Rotor auf den Stator genutzt wird.

Die Zuführung des Fluids in den hydrodynamischen Kreis zur Steuerung der Bremswirkung des Retarders erfolgt bei diesen gattungsgemäßen Retardern über eine Fluidzuführvorrichtung im Retarderträger, die radial unterhalb der Statorschaufeln und axial gegenüber dem Rotorschalenhals angeordnet ist. Über eine radial außen im Retarderträger angeordnete Fluidauslassvorrichtung kann das Fluid den hydrodynamischen Kreis verlassen. Die zumindest eine Druckausgleichsbohrung sorgt dafür, dass eine vergleichsweise geringe Menge des Fluids zwischen dem hydrodynamischen Kreis und dem Druckausgleichsraum zirkulieren kann. Diese Strömung folgt dem Druckgefälle im Retarder von radial außen nach radial innen. Die Druckausgleichsbohrung ist bei den bekannten gattungsgemäßen Retardern radial unterhalb der im Retarderträger ausgebildeten Fluidzuführvorrichtung angeordnet. Durch diese Konstruktion soll sichergestellt werden, dass sich in dem Druckausgleichsraum durch die radial außen über den axialen Ringspalt erfolgende Einströmung von Fluid in denselben insbesondere radial innen kein so hoher Hydraulikdruck aufbaut, dass dadurch der Dichtflansch mit seinen freien radial inneren Ende den Druckausgleichsraum vergrößernd nach axial außen gedrückt wird.

Dennoch zeigen Untersuchungen an solchen Retardern, dass der Fluiddruck im Druckausgleichsraum radial innen unvorteilhaft hoch sein kann. Da der Dichtflansch radial außen an dem Retarderträger befestigt und radial innen axial ungestützt auf der Rotornabe aufliegt, neigt der Dichtflansch trotz der Druckausgleichsbohrung im Rotorschalenhals bei einem vergleichsweise großen Druck dazu, sich von dem Rotor axial weg zu verbiegen. Bei einer gewünschten, besonders engen und daher Bauraum sparenden Bauweise eines solchen Retarders besteht dadurch die Gefahr, dass der Dichtflansch an ein benachbartes rotierendes Bauteil axial anläuft und so einen Schaden verursacht. Außerdem hat sich ergeben, dass eine Reduzierung der Axialkraft auf das genannte Axiallager erwünscht ist, über welches sich die Rotornabe axial am Retarderträger abstützt. Diese Axialkraft auf den Rotor entsteht hauptsächlich durch den im Druckausgleichsraum radial innen wirkenden hydrodynamischen Druck.

Außerdem ist aus der DE 10 2005 002 108 A1 ein nicht gattungsgemäßer Retarder mit einem axial verschiebbaren Rotorschaufelrad bekannt, bei dem der Druckausgleichsraum ein variables Volumen aufweist und über zumindest eine verschließbare Druckausgleichsbohrung mit dem hydrodynamischen Kreis verbunden ist, welche unmittelbar radial unterhalb der Rotorschaufeln am Rotor ausgebildet ist.

Vor diesem Hintergrund liegt der Erfindung die Aufgabe zugrunde, einen gattungsgemäßen Retarder so weiterzubilden, dass bei vergleichbaren Abmessungen und Drehzahlen des Retarders der im Betrieb radial innen im Druckausgleichsraum wirkende Fluiddruck geringer ist als bei bisher bekannten Retardern.

Diese Aufgabe wird durch einen Retarder mit den Merkmalen des Anspruchs 1 gelöst, während die Unteransprüche vorteilhafte Weiterbildungen definieren.

Der Erfindung liegt die Erkenntnis zugrunde, dass der während des Betriebs des Retarders radial innen im Druckausgleichsraum vorliegende Fluiddruck reduziert werden kann, wenn die zumindest eine Druckausgleichsbohrung in dem Rotor soweit radial außen wie möglich bzw. so nahe wie möglich an den Schaufeln des Rotors angeordnet ist. Hierdurch wird erreicht, dass die mit Axialkräften belasteten Rotorschaufeln zwar durch einen im Druckausgleichsraum entstehenden Gegendruck axial abgestützt sind, jedoch radial unterhalb der Druckausgleichsbohrung im Druckausgleichsraum ein stark reduzierter Fluiddruck herrscht. Dadurch, dass der Druckausgleich zwischen dem Druckausgleichsraum und dem hydrodynamischen Kreis weiter radial außen als bisher üblich erfolgt, reduzieren sich radial innen das Druckniveau und die Axialkräfte sowohl auf den Dichtflansch als auch auf den nabennahen Abschnitt des Rotors. Letzteres bewirkt eine gewünschte Entlastung des den Rotor abstützenden Axiallagers.

Die Erfindung geht gemäß Anspruch 1 daher aus von einem hydrodynamischen Retarder, mit einem Statorschaufelrad und einem Rotorschaufelrad, die jeweils eine Mehrzahl von Schaufeln aufweisen, welche zwischen sich einen hydrodynamischen Kreis bilden, mit einer Fluidzuführvorrichtung sowie einer Fluidauslassvorrichtung, die mit dem hydrodynamischen Kreis strömungstechnisch verbunden sind, wobei die Fluidzuführvorrichtung als eine Einlassspirale ausgebildet und radial unterhalb der Statorschaufeln am Retarderträger angeordnet ist, sowie mit einem Druckausgleichsraum, der fern von Statorschaufelrad zwischen dem Rotorschaufelrad und einem sich nach radial innen erstreckenden sowie drehfest angeordneten Dichtflansch ausgebildet ist, und bei dem der Druckausgleichsraum mit dem hydrodynamischen Kreis radial außen über einen Spalt zwischen den Schaufeln des Rotors und dem Dichtflansch sowie radial innen über wenigstens eine Druckausgleichsbohrung verbunden ist.

Gemäß der Erfindung ist zur Lösung der gestellten Aufgabe bei diesem Retarder vorgesehen, dass das radial innere Ende der wenigstens einen Druckausgleichsbohrung in gleicher oder größerer radialer Entfernung zur Drehachse des Retarders angeordnet ist wie der radial innerste Teil der Einlassspirale.

Durch diese Konstruktion ist die wenigstens eine Druckausgleichsbohrung radial weiter außen als bisher angeordnet, so dass die radial inneren Bereiche des Rotors und des Dichtflansches von einem geringeren Fluiddruck als konventionell beaufschlagt werden. Da sich die Einlassspirale unmittelbar unter den Statorschaufeln befindet, dient deren Position einerseits als Bezugspunkt für die Definition der radialen Lage der wenigstens einen Druckausgleichsbohrung. Andererseits wird im Betrieb das durch die Druckausgleichsbohrung strömende Fluid von der Strömung im hydrodynamischen Kreis mitgerissen, so dass auch aus diesem Grunde eine Druckverminderung in dem radial inneren Bereich des Druckausgleichsraumes feststellbar ist.

Gemäß einer Weiterbildung der Erfindung kann vorgesehen sein, dass die wenigstens eine Druckausgleichsbohrung unmittelbar radial unterhalb der Schaufeln des Rotors in einem Abschnitt des Grundkörpers des Rotors ausgebildet ist, der keine oder keine großen Krümmungen aufweist. Hierdurch ist insbesondere bei einem durch einen Umformvorgang aus einem Blech hergestellten Rotor sichergestellt, dass die durch die wenigstens eine Druckausgleichsbohrung im Blech erzeugte Gefügestörung nicht dort vorliegt, wo aufgrund des Umformvorgangs erhöhte Materialspannungen entstehen.

Weiter ist es vorteilhaft, wenn die wenigstens eine Druckausgleichsbohrung schräg im Grundkörper des Rotors ausgebildet ist, so dass sie eine elliptische Geometrie aufweist, deren große Halbachse in Umfangsrichtung des Rotors weist. Solche Druckausgleichsbohrungen wirken auf das Fluid fördernd, so dass das Herausführen des Fluids aus dem Druckausgleichsraum zusätzlich zur vorhandenen Druckdifferenz unterstützt wird. Die Förderwirkung ist dann besonders gut, wenn die zumindest eine Druckausgleichsbohrung einen schräg zur Drehrichtung des Rotors angespitzten oder herabgesetzten Wandungsrand aufweist.

Um ein weiter optimiertes Abströmen aus dem Druckausgleichsraum radial dicht unterhalb der Rotorschaufeln zu erreichen, ist gemäß einer anderen Weiterbildung der Erfindung vorgesehen, dass das Verhältnis der aufsummierten Querschnittsflächen aller Druckausgleichsbohrungen zu der umfangsbezogenen Querschnittsfläche des radialen Spalts zwischen den Rotorschalen und dem Dichtflansch größer als fünf beträgt. Dies bedeutet, dass die radial innen ausgebildete Durchtrittsfläche der zumindest einen Druckausgleichsbohrung mehr als fünfmal so groß ist wie die radial außen ausgebildete Durchtrittsfläche im axialen Spalt zwischen den Rotorschaufeln und dem radial äußeren Abschnitt des Dichtflansches.

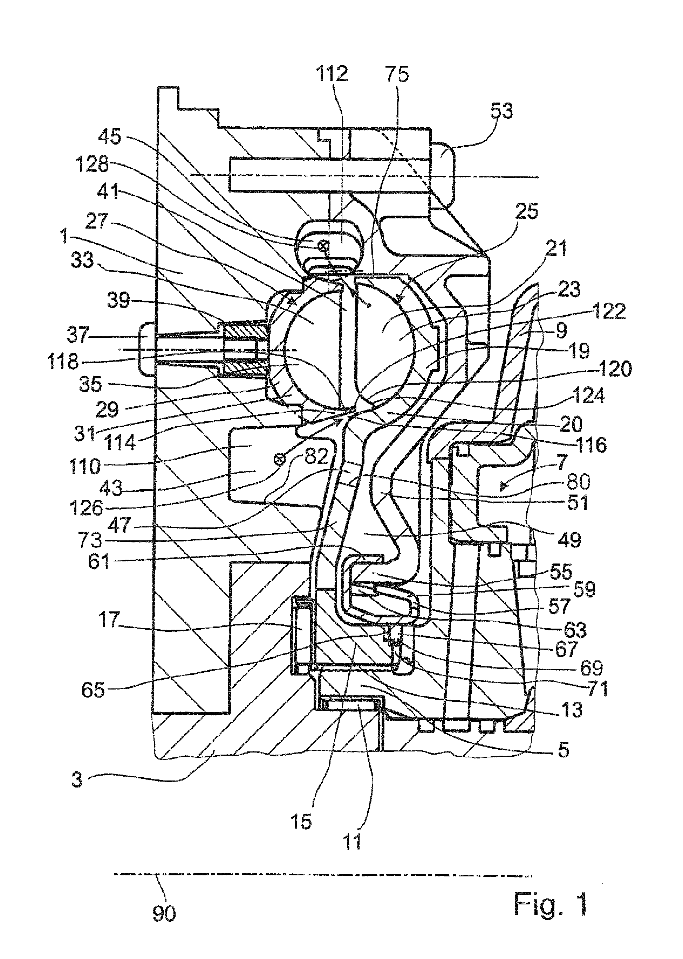

Die Erfindung wird nachfolgend anhand eines Ausführungsbeispieles weiter erläutert. Hierzu ist der Beschreibung eine einzige Figur beigefügt, welche die obere Hälfte eines Längsschnittes durch einen hydrodynamischen Retarder gemäß der Erfindung zeigt. Der Retarder ist gegenüber einer Achse 90 zentriert und verfügt über einen in einem nicht gezeigten Getriebegehäuse drehfest angeordneten Retarderträger 1, welcher ein ebenfalls drehfestes Stützelement 3 radial umgreift. Das Stützelement 3 trägt ein Radiallager 11, auf dem eine Kupplungsnabe 5 einer Kupplungseinheit 7 drehbar gelagert ist. Die Kupplungseinheit 7 verfügt über ein Kupplungsgehäuse 9, welches mit einer nicht dargestellten Getriebeeingangswelle drehfest verbunden ist. Aufgrund dieser Verbindung nimmt die Kupplungseinheit 7 und damit das Kupplungsgehäuse 9 sowie letztlich die Kupplungsnabe 5 an einer Drehbewegung der Getriebeeingangswelle teil.

Die Kupplungsnabe 5 der Kupplungseinheit 7 steht über eine axiale Verzahnung 13 mit einer Rotornabe 15 des Retarders in Eingriff, wobei sich die Rotornabe 15 an ihrer von der Kupplungseinheit 7 abgewandten Seite über ein Axiallager 17 am Stützelement 3 axial abstützt. Die Rotornabe 15 ist an einem als Rotorschale 20 dienenden Grundkörper 19 befestigt, der sich, ausgehend von der Rotornabe 15, nach radial außen erstreckt und im radial äußeren Bereich eine Beschaufelung 21 mit einer Mehrzahl von Schaufeln 23 zur Bildung eines Rotorschaufelrades 25 aufnimmt. Das Rotorschaufelrad 25 wirkt mit einem Statorschaufelrad 27 des Retarders zusammen, das ebenfalls über einen Grundkörper 29 verfügt, der als Statorschale 31 wirksam ist und zur Aufnahme einer Beschaufelung 33 mit Schaufeln 35 dient. An der Statorschale 31 sind an deren vom Rotorschaufelrad 25 abgewandten Seite über den Umfang verteilt Gewindehülsen 39 befestigt, in die jeweils ein Befestigungselement 37 einbringbar ist. Dabei ist durch die Befestigungselemente 37, hier Schrauben, in Verbindung mit den Gewindehülsen 39 das Statorschaufelrad 27 am Retarderträger 1 befestigt.

Das Rotorschaufelrad 25 bildet zusammen mit dem Statorschaufelrad 27 einen als hydrodynamischen Kreis 41 bezeichneten Raum, der mit einem viskosen Medium zumindest teilweise befüllt ist. Der Füllungsgrad des hydrodynamischen Kreises 41 kann mittels einer Fluidzuführvorrichtung 43 erhöht werden, während über eine Fluidauslassvorrichtung 45 das viskose Medium aus dem hydrodynamischen Kreis 41 entfernt werden kann. In bekannter Weise kann über den Befüllungsgrad des hydrodynamischen Kreises 41 dessen Momentenübertragbarkeit und damit die durch den Retarder ausgelöste Bremswirkung eingestellt werden. Die Fluidzuführvorrichtung 43 dient somit zusammen mit der Fluidauslassvorrichtung 45 zur Regelung des Retarders.

Die Fluidzuführvorrichtung 43 ist radial unterhalb der Statorschaufeln 35 angeordnet und in Form einer Einlassspirale 110 ausgebildet. In dieser Einlassspirale 110 wird das durch die Fluidzuführvorrichtung 43 eingeleitete Fluid in eine Fluidströmung 126 versetzt, die in Umfangsrichtung fließt, wie durch den mit der Bezugsziffer 126 benannten Strömungspfeil angedeutet ist. Durch einen am Grundkörper 31 des Statorschaufelrades 27 radial innen ausgebildeten, gegenüber der Außenkontur des Statorschaufelrades 27 in Richtung zum Rotorschaufelrad 25 überstehenden Axialvorsprung 118 ist dem Statorschaufelrad 27 eine Strömungsführung 114 zugeordnet, durch welche der in der Einlassspirale 110 im wesentlichen tangential ankommenden Fluidströmung 126 eine Bewegungskomponente in Radialrichtung überlagert wird. Die Fluidströmung 126 wird somit unmittelbar in das Rotorschaufelrad 25 und damit in den hydrodynamischen Kreis 41 eingeleitet.

Um an dem Rotorschaufelrad 25 Raum zum Eindringen der Strömungsführung 114 zu schaffen, sind die Schaufeln 23 des Rotorschaufelrades 25 in demjenigen radialen Bereich, in welchem ein axial freies Ende 122 des Axialvorsprunges 118 der Strömungsführung 114 eintaucht, mit jeweils einer Rücknahme 124 versehen. Durch die gesamte Beschaufelung 21 des Rotorschaufelrades 25 bildet sich somit eine Aussparung 120 für den Axialvorsprung 118 der Strömungsführung 114.

Zwischen der Rotorschale 20 des Rotorschaufelrades 25 und dem axial freien Ende 122 des Axialvorsprungs 118 ist ein Strömungsweg 116 für die Fluidströmung 126 zum Eintritt derselben in den hydrodynamischen Kreis 41 gebildet. Dieser Strömungsweg 116 kann bis auf Spaltbreite verengt sein.

Fluid, das den hydrodynamischen Kreis 41 verlassen soll, tritt in eine radial außerhalb des hydrodynamischen Kreises 41 vorgesehene Auslassspirale 112 ein, die der Fluidauslassvorrichtung 45 zugeordnet ist. Das aus dem hydrodynamischen Kreis 41 abgeleitete Fluid führt hierbei eine Fluidströmung 128 in Umfangsrichtung durch, wie durch den mit der Bezugsziffer 128 benannten Strömungspfeil angedeutet ist. Das Fluid strömt somit innerhalb der Auslassspirale 112 zumindest im Wesentlichen tangential zum hydrodynamischen Kreis 41.

In dem Grundkörper 19 des Rotorschaufelrades 25 ist im Bereich des Rotorschalenhalses 73 zumindest eine Druckausgleichsbohrung 47 ausgebildet. Durch diese Druckausgleichsbohrung 47 ist der hydrodynamische Kreis 41 über einen radial innen ausgebildeten Strömungsweg mit einem Druckausgleichsraum 49 verbunden, der sich axial zwischen dem Grundkörper 19 des Rotorschaufelrades 25 und einem Dichtflansch 51 befindet. Der Dichtflansch 51 ist erkennbar radial außen mittels Befestigungselementen 53, wie beispielsweise Schrauben, am Retarderträger 1 befestigt. Der Druckausgleichsraum 49 ist radial außen über einen ringförmigen Spalt 75 zwischen dem radial äußeren Ende der Rotorschalen 20 und einer radial gegenüberliegenden Fläche des Dichtflansches 51 mit dem hydrodynamischen Kreis 41 des Retarders verbunden. Durch diesen Spalt 75 kann im Betrieb des Retarders unter hohem dynamischen Druck stehendes Fluid von dem hydrodynamischen Kreis 41 in den Druckausgleichsraum 51 gelangen und dort einen ebenso hohen Gegendruck auf die Rotorschalen 20 ausüben.

Bevor weiter auf die konstruktive Ausführung dieses Dichtflansches 51 eingegangen wird, sei kurz die Funktion des Druckausgleichsraumes 49 erläutert, der aufgrund der Druckausgleichsbohrung 47 radial oberhalb derselben über ähnliche Druckbedingungen wie der hydrodynamische Kreis 41 verfügt und somit eine starke einseitige Belastung des Grundkörpers 19 des Rotorschaufelrades 25 von der Seite des hydrodynamischen Kreises 41 aus verhindert.

Der Dichtflansch 51 weist an seinem radial inneren Ende einen im Wesentlichen auf das Rotorschaufelrad 25 zugerichteten, sich axial erstreckenden Aufnahmevorsprung 55 auf, an welchem eine Ringfederdichtung 57 befestigt ist. Diese hintergreift mit einem ersten Schenkel 59 eine am Aufnahmevorsprung 55 vorgesehene Radialnase 63 und umgreift mit einem zweiten Schenkel 61 die radiale Gegenseite des Aufnahmevorsprunges 55. Derart sowohl axial als auch radial am Dichtflansch 51 befestigt, belastet die Ringfederdichtung 57 mit einer Bodenfläche 65 die Kupplungsnabe 5. Um an dieser Kontaktstelle zwischen dem drehfesten Dichtflansch 51 und der rotierenden Kupplungseinheit 7 eine hinreichende Dichtung zu gewährleisten, ist in einer Nutung 69 der Kupplungsnabe 5 ein Dichtring 67 eingesetzt, der vorzugsweise ebenso wie die Nutung 69 von rechteckigem Querschnitt ist. Der Dichtring 67 besteht bevorzugt aus Grauguss, ist aber alternativ auch aus einem elastomeren Werkstoff herstellbar. Dem Dichtring 67 ist eine in der Kupplungsnabe 5 ausgebildete, im Wesentlichen radial verlaufende Schmierbohrung 71 zugeordnet.

Wie die einzige Figur verdeutlicht, ist die zumindest eine Druckausgleichsbohrung 47 nicht wie bisher üblich radial unterhalb der Fluidzuführvorrichtung 41 bzw. radial unterhalb der Einlassspirale 110 angeordnet, sondern radial in etwa in gleicher Höhe ausgebildet. Die zumindest eine Druckausgleichsbohrung 47 kann auch noch weiter radial außen bis dicht heran an die Rotorschalen 20 angeordnet sein. Aus fertigungstechnischen Gründen ist es vorteilhaft, die Druckausgleichsbohrung 47 in einem Bereich des Grundkörpers 19 des Rotorschaufelrades 25 anzuordnen, der nach der Erzeugung der Druckausgleichsbohrung 47 in einem dann folgendem Umformvorgang keiner Umformung mit starken Krümmungen ausgesetzt ist. Erkennbar ist der Retarder so ausgebildet, dass das radial innere Ende 80 der wenigstens einen Druckausgleichsbohrung 47 mit größerer radialer Entfernung zur Drehachse 90 des Retarders angeordnet ist als der radial innerste Teil 82 der Einlassspirale 110.

Wie schon weiter vorne angedeutet wurde, wird durch die Anordnung der Druckausgleichsbohrung 47 nahe an den Rotorschalen 20 erreicht, dass sich im Druckausgleichsraum 49 radial innen, also im Bereich des Axiallagers 17 und im Bereich des radial inneren Endes des Dichtflansches 51, keine hohen Fluiddrücke aufbauen können, so dass das Axiallager 17 seine Gebrauchsdauer verlängernd entlastet und der Dichtflansch 51 nicht stark in Richtung zur Kupplung 7 ausgelenkt wird. Der in dem Druckausgleichsraum 49 im Bereich der Rotorschalen 20 im Betrieb wirkende Fluiddruck reicht zudem aus, um den Rotor in einer optimalen Lage zu positionieren.

Vorzugsweise sind mehrere Druckausgleichsbohrungen 47 im Grundkörper 19 des Rotors ausgebildet, wobei diese umfangsbezogen gleichverteilt angeordnet sind. Die wenigstens eine Druckausgleichsbohrung 47 kann in einer Ausführungsform schräg in den Grundkörper 19 des Rotors eingebracht sein, so dass auch die Ränder der Druckausgleichsbohrung 47 nicht axial sondern schräg ausrichtet sind. Die Schräge der wenigstens einen Druckausgleichsbohrung 47 erstreckt sich dabei bevorzugt in Drehrichtung des Rotors, wodurch diese auf das Fluid förderwirksam ist. Weiter kann vorgesehen sein, dass die Anzahl der Druckausgleichsbohrungen 47 deutlich größer ist als bei Retardern gemäß dem Stand der Technik. So können beispielsweise mehr als zwanzig Druckausgleichsbohrungen 47 gleichverteilt über dem Umfang des Rotors ausgebildet sein. Schließlich kann vorgesehen sein, dass das Verhältnis der aufsummierten Querschnittfläche aller Druckausgleichsbohrungen 47 zu der umfangsbezogenen Querschnittsfläche des radialen Spalts 75 zwischen den Rotorschalen 20 und dem Dichtflansch 51 abweichend von dem bisher üblichen Wert größer als fünf beträgt.

### Bezugszeichen

- 1: Retarderträger
- 3: Stützelement
- 5: Kupplungsnabe
- 7: Kupplungseinheit
- 9: Kupplungsgehäuse
- 11: Radiallager
- 13: Verzahnung
- 15: Rotornabe
- 17: Axiallager
- 19: Grundkörper des Rotors
- 20: Rotorschale
- 21: Beschaufelung des Rotors
- 23: Schaufeln des Rotors
- 25: Rotorschaufelrad
- 27: Statorschaufelrad
- 29: Grundkörper des Stators
- 31: Statorschale
- 33: Beschaufelung des Stators
- 35: Schaufeln des Stators
- 37: Befestigungselement
- 39: Gewindehülse
- 41: Hydrodynamischer Kreis
- 43: Fluidzuführvorrichtung
- 45: Fluidauslassvorrichtung
- 47: Druckausgleichsbohrung
- 49: Druckausgleichsraum
- 51: Dichtflansch
- 53: Befestigungselemente
- 55: Aufnahmevorsprung
- 57: Ringfederdichtung
- 59: Schenkel
- 61: Schenkel
- 63: Radialnase
- 65: Bodenfläche
- 67: Dichtring
- 69: Nutung
- 71: Schmierbohrung
- 73: Rotorschalenhals
- 75: Spalt zwischen Rotor und Dichtscheibe
- 80: Radial innerster Teil der Einlassspirale
- 82: Radial innerster Teil der Druckausgleichsbohrung
- 90: Drehachse des Retarders
- 110: Einlassspirale
- 112: Auslassspirale
- 114: Strömungsführung
- 116: Strömungsweg
- 118: Axialvorsprung
- 120: Aussparung
- 122: Axial freies Ende des Axialvorsprungs
- 124: Rücknahme
- 126: Fluidströmung
- 128: Fluidströmung

## Patentansprüche

1. Hydrodynamischer Retarder, mit einem Statorschaufelrad (27) und einem Rotorschaufelrad (25), die jeweils eine Mehrzahl von Schaufeln (23, 35) aufweisen, welche zwischen sich einen hydrodynamischen Kreis (41) bilden, mit einer Fluidzuführvorrichtung (43) sowie einer Fluidauslassvorrichtung (45), die mit dem hydrodynamischen Kreis (41) strömungstechnisch verbunden sind, wobei die Fluidzuführvorrichtung (43) als eine Einlassspirale (110) ausgebildet und radial unterhalb der Statorschaufeln (35) am Retarderträger (1) angeordnet ist, sowie mit einem Druckausgleichsraum (49), der fern von Statorschaufelrad (27) zwischen dem Rotorschaufelrad (25) und einem sich nach radial innen erstreckenden sowie drehfest angeordneten Dichtflansch (51) ausgebildet ist, und bei dem der Druckausgleichsraum (49) mit dem hydrodynamischen Kreis (41) radial außen über einen Spalt (75) zwischen den Schaufeln (23) des Rotors und dem Dichtflansch (51) sowie radial innen über wenigstens eine Druckausgleichsbohrung (47) verbunden ist, **dadurch gekennzeichnet, dass** das radial innere Ende (80) der wenigstens einen Druckausgleichsbohrung (47) in gleicher oder größerer radialer Entfernung zur Drehachse (90) des Retarders angeordnet ist wie der radial innerste Teil (82) der Einlassspirale (110).

2. Hydrodynamischer Retarder nach Anspruch 1, **dadurch gekennzeichnet, dass** die wenigstens eine Druckausgleichsbohrung (47) unmittelbar radial unterhalb der Schaufeln (23) des Rotors in einem Abschnitt des Grundkörpers (19) des Rotors ausgebildet ist, der keine oder keine großen Krümmungen aufweist.

3. Hydrodynamischer Retarder nach Anspruch 1 oder 2, **dadurch gekennzeichnet, dass** die wenigstens eine Druckausgleichsbohrung (47) schräg im Grundkörper (19) des Rotors ausgebildet ist, so dass sie eine elliptische Geometrie aufweist, deren große Halbachse in Umfangsrichtung des Rotors weist.

4. Hydrodynamischer Retarder nach einem der Ansprüche 1 bis 3, **dadurch gekennzeichnet, dass** das Verhältnis der aufsummierten Querschnittflächen aller Druckausgleichsbohrungen (47) zu der umfangsbezogenen Querschnittsfläche des radialen Spalts (75) zwischen den Rotorschalen (20) und dem Dichtflansch (51) größer als fünf beträgt.
